# EUROPEAN PATENT APPLICATION

(11) **EP 4 787 692 A1**
(43) Date of publication of application: **05.08.2026**
(21) Application number: 25224674.9
(22) Date of filing: 17.12.2025
(51) Int. Cl.: H02M 1/00, H02M 1/10, H02M 5/293, H02M 7/797, H02M 1/15

(54) **SYSTEMS AND METHODS FOR ACTIVE FILTER FOR BIDIRECTIONAL ONBOARD BATTERY CHARGER**

(30) Priority: 29.01.2025 US 202519040335
(71) Applicant: BorgWarner Luxembourg Automotive Systems S.A., 4940 Bascharage (LU)
(72) Inventor: AMMANAMANCHI, Venkata Jaya Sai Praneeth, Luxembourg (LU); BAUER, Scott E., Holly (US); SCHMITT, Julien, Kuntzig (FR)
(74) Representative: Office Freylinger

(57) **Abstract**

A system includes a transformer including a primary side and a secondary side; a matrix converter connected to the primary side of the transformer and connected to a line for a voltage source or a load; and an active filter configured to reduce a ripple in the system.

## Description

### TECHNICAL FIELD

Various embodiments of the present disclosure relate generally to a matrix converter with an active filter, and, more particularly, to a four leg matrix converter with an active filter for a high voltage and low voltage converter in a bidirectional onboard battery charger for an electric vehicle.

### BACKGROUND

In the field of battery chargers, a two-stage layout is generally used to meet a requirement for use in automotive vehicles as an onboard charger. These onboard chargers have high power density, with less weight and require less space. The configuration layout used in single-phase or three-phase chargers includes an alternating current (AC) to direct current (DC) Power Factor Correction (PFC) converter at stage I and an isolated DC-DC converter at stage II. This two-stage configuration may require several components to reduce ripple current.

The present disclosure is directed to overcoming one or more of these above-referenced challenges.

### SUMMARY OF THE DISCLOSURE

In some aspects, the techniques described herein relate to a system including: a transformer including a primary side and a secondary side; a matrix converter connected to the primary side of the transformer and connected to a line for a voltage source or a load; and an active filter configured to reduce a ripple in the system.

In some aspects, the techniques described herein relate to a system, wherein the active filter is connected to the primary side of the transformer.

In some aspects, the techniques described herein relate to a system, wherein the active filter is connected to the secondary side of the transformer.

In some aspects, the techniques described herein relate to a system, wherein the matrix converter includes: a first phase upper bidirectional switch, a first phase lower bidirectional switch, a second phase upper bidirectional switch, a second phase lower bidirectional switch, a third phase upper bidirectional switch, a third phase lower bidirectional switch, a neutral phase upper bidirectional switch, and a neutral phase lower bidirectional switch.

In some aspects, the techniques described herein relate to a system, wherein the active filter includes: a capacitor, a first switch, a second switch, a third switch, and a fourth switch.

In some aspects, the techniques described herein relate to a system, further including: a high voltage bridge rectifier connected to the secondary side of the transformer.

In some aspects, the techniques described herein relate to a system, wherein the high voltage bridge rectifier includes an inductor pair.

In some aspects, the techniques described herein relate to a system, wherein the transformer further includes a tertiary side.

In some aspects, the techniques described herein relate to a system, further including: a low voltage bridge rectifier connected to the tertiary side of the transformer.

In some aspects, the techniques described herein relate to a system, wherein the low voltage bridge rectifier includes an inductor pair.

In some aspects, the techniques described herein relate to a system, wherein the system is configured to operate in each of a three phase source to battery operation, a battery to three phase load operation, a single phase source to battery operation, a battery to single phase load operation, a battery-to-battery operation, and a simultaneous battery-to-load and battery-to-battery operation.

In some aspects, the techniques described herein relate to a system, further including: one or more controllers configured to control an operation of one or more of the matrix converter or the active filter.

In some aspects, the techniques described herein relate to a system, further including: one or more batteries, wherein the system is provided as a bidirectional battery charger configured to: receive input AC power from a source of the line, convert the input AC power to output DC power, and supply the output DC power to charge the one or more batteries, and receive input DC power from the one or more batteries, convert the input DC power to output AC power, and supply the output AC power to a load of the line.

In some aspects, the techniques described herein relate to a system, further including: a battery; and a motor, wherein the system is provided as an electric vehicle.

In some aspects, the techniques described herein relate to an active filter for a power converter including a matrix converter, the active filter including: a capacitor connected to a first node and a second node; a first switch connected to the first node and a first external connection; a second switch connected to the second node and the first external connection; a third switch connected to the first node and a second external connection; and a fourth switch connected to the second node and the second external connection.

In some aspects, the techniques described herein relate to an active filter, wherein the first external connection and the second external connection are connected to the matrix converter of the power converter and a primary side of a transformer of the power converter.

In some aspects, the techniques described herein relate to an active filter, wherein the first external connection and the second external connection are connected to a high voltage bridge rectifier of the power converter.

In some aspects, the techniques described herein relate to a bidirectional current-fed dual-active-bridge converter including: a transformer including a primary side, a first secondary side, and a second secondary side; a matrix converter connected to the primary side of the transformer and connected to a line for a voltage source or a load; an active filter including a capacitor and four switches; a first voltage bridge rectifier connected to the first secondary side of the transformer; and a second voltage bridge rectifier connected to the second secondary side of the transformer.

In some aspects, the techniques described herein relate to a bidirectional current-fed dual-active-bridge converter, further including: a first switch selectively connecting a first phase leg of the matrix converter and a second phase leg of the matrix converter, and a second switch selectively connecting a third phase leg of the matrix converter and a neutral phase leg of the matrix converter.

In some aspects, the techniques described herein relate to a bidirectional current-fed dual-active-bridge converter, wherein each phase leg of the matrix converter includes two bidirectional switches.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a power converter, according to one or more embodiments.
FIG. 2 depicts an exemplary system infrastructure for a power converter, according to one or more embodiments.
FIG. 3 depicts an exemplary system infrastructure for a controller, according to one or more embodiments.
FIG. 4 depicts an exemplary system infrastructure for a power converter with an active filter on a transformer secondary side, according to one or more embodiments.
FIG. 5 depicts an exemplary system infrastructure for a power converter with an active filter on a transformer primary side, according to one or more embodiments.
FIG. 6 depicts an exemplary power converter in a three-phase balanced operation with the active filter off, according to one or more embodiments.
FIG. 7 depicts an exemplary power converter in a three-phase unbalanced operation with the active filter off, according to one or more embodiments.
FIG. 8 depicts an exemplary power converter in a three-phase unbalanced operation with the active filter on, according to one or more embodiments.
FIG. 9 depicts an exemplary power converter in a single phase operation with the active filter on, according to one or more embodiments.
FIG. 10 depicts an exemplary power converter in a battery-to-battery operation with the active filter off, according to one or more embodiments.
FIG. 11 depicts an exemplary system infrastructure for a current-fed dual-active-bridge (CFDAB) converter, according to one or more embodiments.
FIG. 12 depicts an exemplary CFDAB converter in a vehicle-to-load operation, according to one or more embodiments.
FIG. 13 depicts an exemplary CFDAB converter in a simultaneous vehicle-to-load and battery-to-battery operation, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to a matrix converter with an active filter, and, more particularly, to a four leg matrix converter with an active filter for a high voltage and low voltage converter in a bidirectional onboard battery charger for an electric vehicle.

A power converter, such as a battery charger, for example, according to the disclosure may operate with multiple types of alternating current (AC) input power supplies, including single phase, split/dual/two phase, and three-phase power supplies. The charger may be compatible with a wide range of configurations.

A power converter according to the disclosure may operate as a battery charger only, or operate bidirectionally for a charging operation or a power supply operation. The converter may either receive power from an AC power source and provide DC power to a battery, or receive power from the battery and provide power as an AC power source. A vehicle to grid (V2G) or vehicle to load (V2L, V2X) configuration may be achieved with a designed control strategy for single-phase, two-phase, and three-phase systems. Switches of the battery charger may be any devices, such as GTO, thyristors, or MOSFETs/ IGBTs with series diodes, for example. These switches may also be mechanical components (such as relays or contactors) if sufficient failure rates and arcing conditions during operation are met. Additionally, if the switches are semi-permanent in position, the switches may be implemented as one or more jumper connectors or dual in-line package (DIP) switches.

Electric vehicles, energy storage systems, and backup generators, for example, convert electric power from one form to another. Additionally, an on-board charger for a vehicle, for example, may have a dual purpose. The on-board charger may be a bi-directional system that converts AC voltage to DC voltage in a charging mode (grid-to-battery) and DC voltage to AC voltage in a discharge or inverter mode (battery-to-grid). The charging mode may convert the grid AC into DC voltage to charge the vehicle high voltage (HV) battery, and the discharge or inverter mode may convert the HV battery DC voltage into AC voltage that may be supplied to a load of the grid line voltage, be supplied as a backup generator to power a house when the grid is down, or as an inverter to supply voltage to vehicle AC outlets, for example. The on-board charger may have an isolated converter to meet automotive requirements.

An onboard charger may include a converter to convert a high voltage (HV) to a low voltage (LV), for use by auxiliary circuits in an electric vehicle or plug-in hybrid electric vehicle, for example. A high voltage may be 400V or 800V, for example. A low voltage may be 12V or 48V, for example. An onboard charger may operate in different modes, such as pre-charging a bulk capacitor, for example. The disclosure refers to a high voltage and a low voltage, where the high voltage is a greater voltage than the low voltage. However, the disclosure is not limited thereto. For example, the high voltage may be a first voltage, and the low voltage may be a second voltage, where the first voltage may be less than, greater than, or equal to the second voltage.

One or more embodiments may include an active filter for the HV and LV converter to reduce ripple and reduce a number of passive devices. One or more embodiments may provide a charger that operates with any type of AC power source (single, split phase (two-phase), and three-phase power supplies) and uses fewer components to have more compatibility and a wide range of operations. One or more embodiments may provide algorithms designed to ensure the operation of the converter with various input power supplies with wide variations in input voltages to generate a wide range of output voltages.

One or more embodiments may provide a single-stage matrix converter with four legs to operate in single and three-phase operation. An active filter is used to suppress the low-frequency ripple during the single-phase operation. The activation and deactivation of the active filter is performed based on the input power supply and the amount of ripple content (peak to peak). The operations may be performed by Gallium nitride (GaN) devices, Silicon-carbide (SiC) devices, or bidirectional switch (BDS) devices, according to the operating voltage ranges.

One or more embodiments may provide a four-leg matrix converter for the onboard battery charger to operate with both single and three-phase. One or more embodiments may provide a phase shedding operation based on the current rating in a single phase operation. One or more embodiments may provide an active filter to reduce low-frequency ripple content. One or more embodiments may provide an improved light load operation point (i.e., a reduced switching frequency). One or more embodiments may improve the switching states of the converter operation with cascaded HV and LV. One or more embodiments may provide a power converter that operates efficiently for a wide range of input voltages and output voltages.

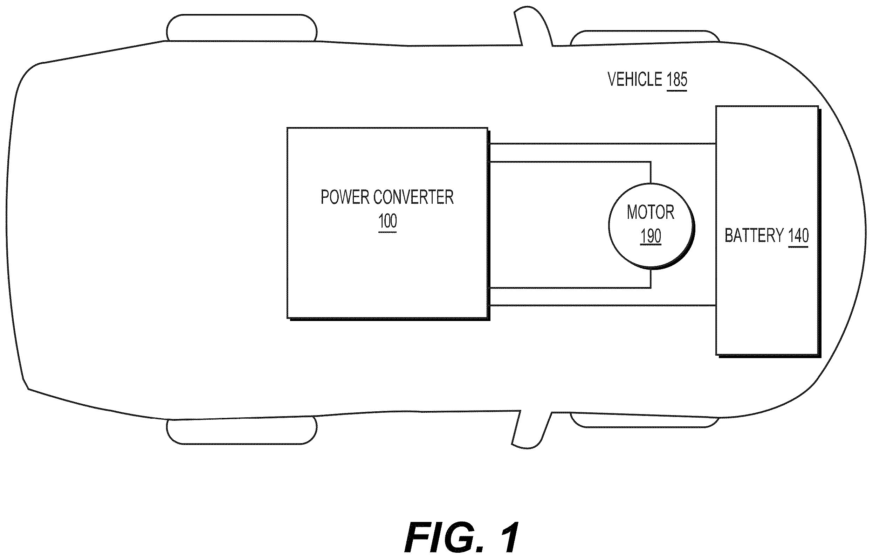

FIG. 1 depicts an exemplary system infrastructure for a vehicle including a power converter, according to one or more embodiments. The power converter 100 may be a combined inverter and converter. Electric vehicle 185 may include power converter 100, motor 190, and battery 140. Power converter 100 may include components to receive electrical power from an external source and output electrical power to charge battery 140 of electric vehicle 185. Power converter 100 may convert DC power from battery 140 in electric vehicle 185 to AC power, to drive motor 190 of the electric vehicle 185, for example, but the embodiments are not limited thereto. For example, power converter 100 may include components to receive electrical power from an external source and output electrical power to charge battery 140 without motor 190 connected to power converter 100. Power converter 100 may convert DC power from battery 140 in electric vehicle 185 to AC power, to drive AC components other than motor 190 of the electric vehicle 185. Power converter 100 may be bidirectional, and may convert DC power to AC power, or convert AC power to DC power, such as during regenerative braking, for example. Power converter 100 may be a three-phase inverter, a single-phase inverter, or a multi-phase inverter.

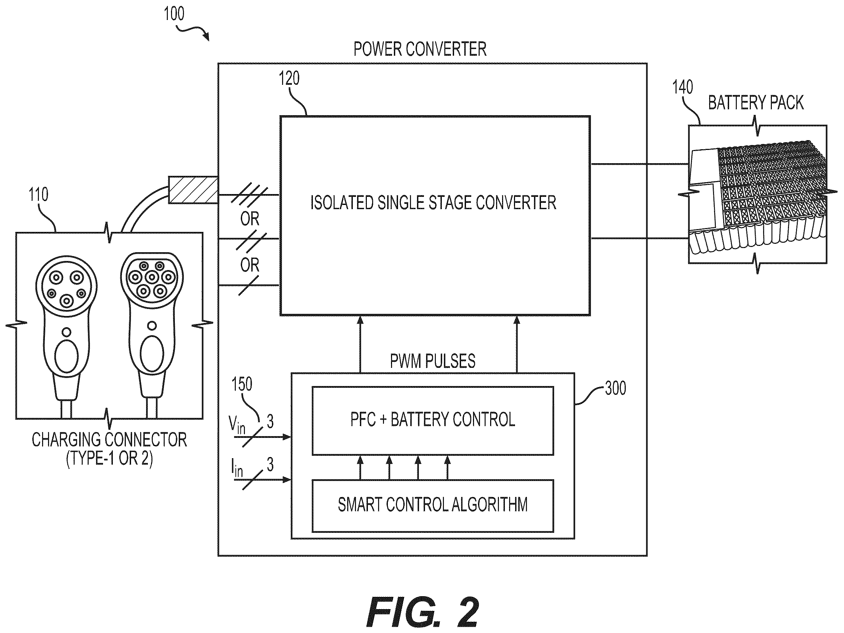

FIG. 2 depicts an exemplary system infrastructure for a battery charger, according to one or more embodiments. Power converter 100 may include or be electrically connectable to a charging connector 110. The charging connector 110 may provide an electrical connection from an external power supply to the power converter 100, and may be a Type 1 or a Type 2 connector, for example. The charging connector 110 may transfer single phase, two-phase, or three phase power.

The power converter 100 may include an isolated single-stage converter 120, and a controller 300 receiving signals from input sensor 150. Isolated single-stage converter 120 may be an AC-DC converter. Controller 300 may include one or more controllers. The power converter 100 may include or be electrically connectable to a battery 140. The power converter 100 may be used in automotive vehicles as an onboard charger to transfer power from an external power source through charging connector 110 to battery 140 in a grid-to-battery operation, or to transfer power from battery 140 in a vehicle to load configuration (a battery-to-load operation). The power converter 100 may be included in a system provided as an electric vehicle including a motor configured to rotate based on power received from the battery 140.

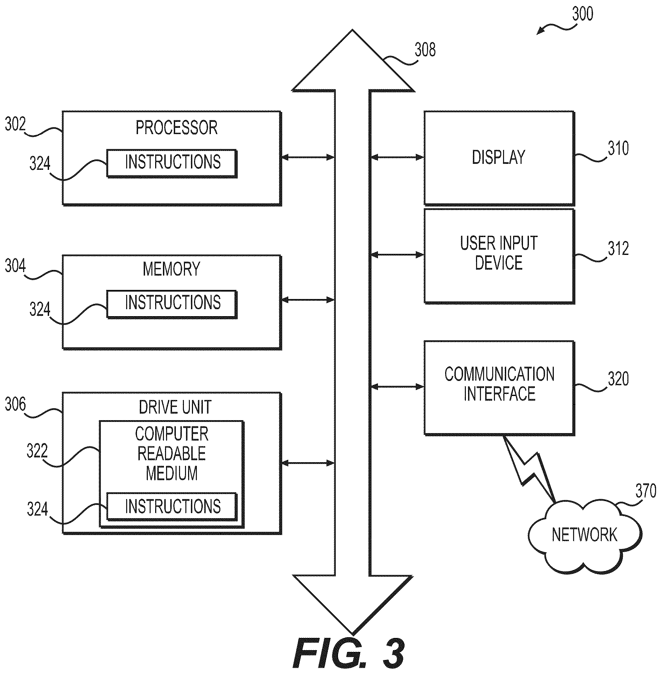

FIG. 3 depicts an exemplary system infrastructure for a controller, according to one or more embodiments. Controller 300 may include one or more controllers.

The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a power converter, a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As shown in FIG. 3, the controller 300 may include a processor 302, e.g., a central processing unit (CPU), a graphics processing unit (GPU), or both. The processor 302 may be a component in a variety of systems. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

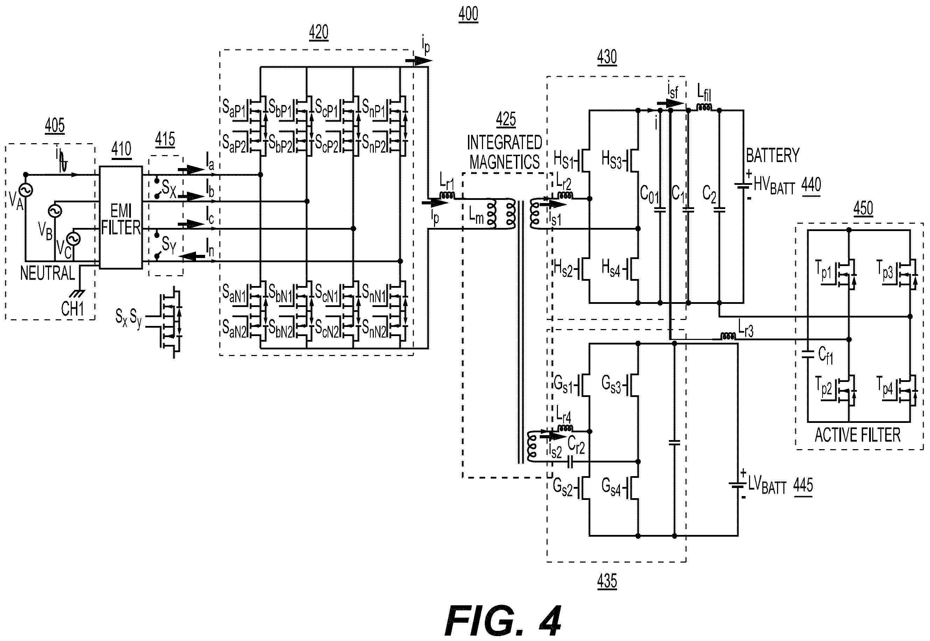

FIG. 4 depicts an exemplary system infrastructure for a power converter with an active filter on a transformer secondary side, according to one or more embodiments. As depicted in FIG. 4, system 400 may include line 405, line filter 410, line switch 415, matrix converter 420, transformer 425, HV bridge rectifier 430, LV bridge rectifier 435, HV battery 440, LV battery 445, and active filter 450.

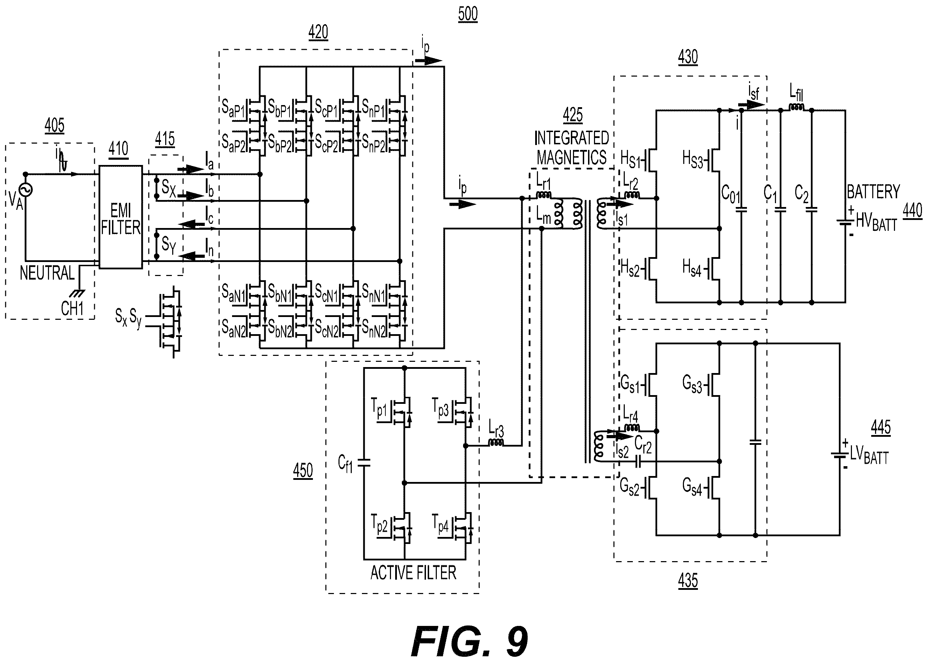

Line 405 may include a three-phase voltage source or load, as depicted in FIG. 4, a two-phase voltage source or load, or a single-phase voltage source or load, for example, as depicted in FIG. 9. Line filter 410 may suppress electromagnetic noise transmitted through conduction, for example. Line switch 415 may include first switch Sx selectively connecting a first phase leg and a second phase leg, and second switch Sy selectively connecting a third phase leg and a neutral phase leg. For example, in a three-phase operation, first switch Sx and second switch Sy may be open, and in a single-phase or a split-phase operation, first switch Sx may be closed to connect a first phase leg and a second phase leg, and second switch Sy may be closed to connect a third phase leg and a neutral phase leg. As depicted in FIG. 4, each of first switch Sx and second switch Sy may be a bidirectional switch, but the disclosure is not limited thereto.

Matrix converter 420 may include a first phase upper bidirectional switch SaP1 and SaP2, a first phase lower bidirectional switch SaN1 and SaN2, a second phase upper bidirectional switch SbP1 and SbP2, a second phase lower bidirectional switch SbN1 and SbN2, a third phase upper bidirectional switch ScP1 and ScP2, a third phase lower bidirectional switch ScN1 and ScN2, a neutral phase upper bidirectional switch SnP1 and SnP2, and a neutral phase lower bidirectional switch SnN1 and SnN2. As depicted in FIG. 4, each switch of matrix converter 420 may be a bidirectional switch, but the disclosure is not limited thereto.

Transformer 425 may be one or more high-frequency transformers, and may be a single transformer with multiple coils or windings, multiple transformers with single coils or windings, or any combination thereof. HV bridge rectifier 430 may include first switch Hs1, second switch Hs2, third switch Hs3, and fourth switch Hs4. LV bridge rectifier 435 may include first switch Gs1, second switch Gs2, third switch Gs3, and fourth switch Gs4. The switches of HV bridge rectifier 430 and LV bridge rectifier 435 may convert a square-wave signal to DC power and vice versa.

Matrix converter 420 may be connected to a primary side of transformer 425. HV bridge rectifier 430 may be connected to a secondary side of transformer 425 and HV battery 440. LV bridge rectifier 435 may be connected to a tertiary side (or another secondary side) of transformer 425 and LV battery 445. Active filter 450 may include capacitor Cf1, first switch Tp1, second switch Tp2, third switch Tp3, and fourth switch Tp4. Capacitor Cf1 may be connected to a first node and a second node of active filter 450. First switch Tp1 may be connected to the first node and a first external connection. Second switch Tp2 may be connected to the second node and the first external connection. Third switch Tp3 may be connected to the first node and a second external connection. Fourth switch Tp4 may be connected to the second node and the second external connection. Active filter 450 may be connected via the first external connection and the second external connection to secondary side of transformer 425 near HV battery 440 to suppress a low frequency ripple. Active filter 450 may be in a boost converter configuration with third switch Tp3 open and fourth switch Tp4 closed.

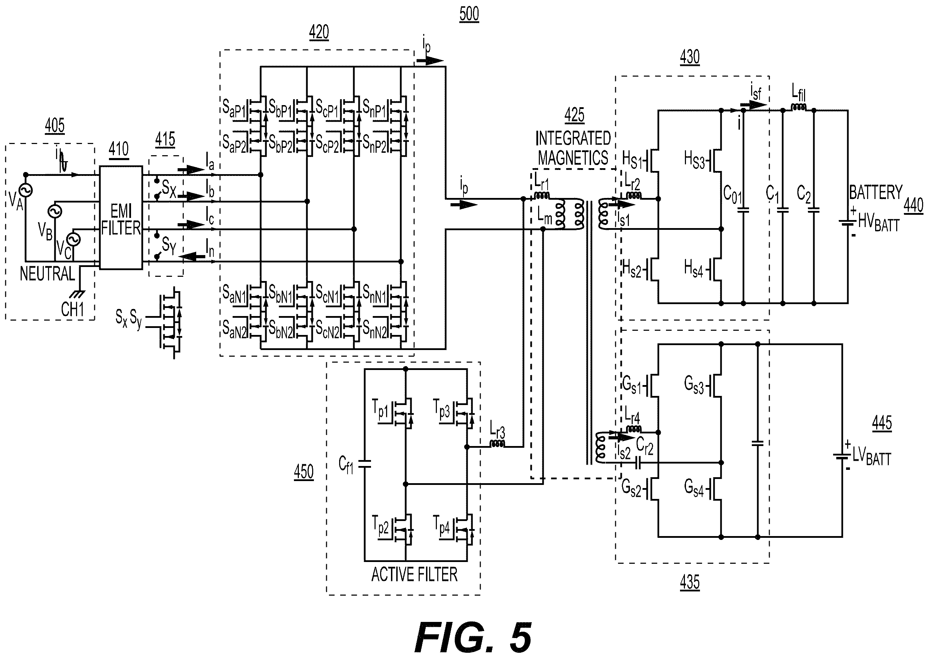

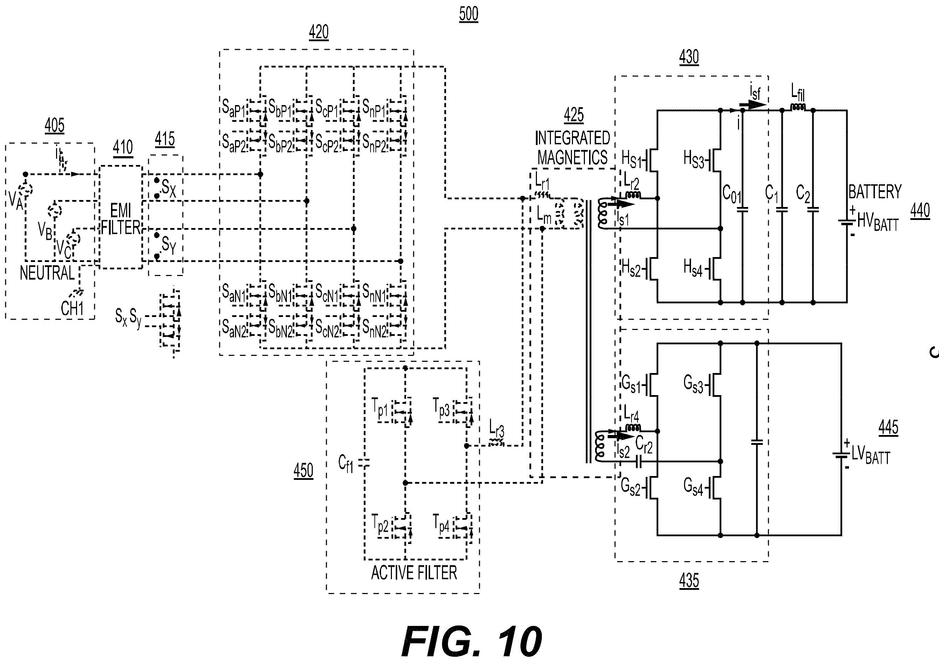

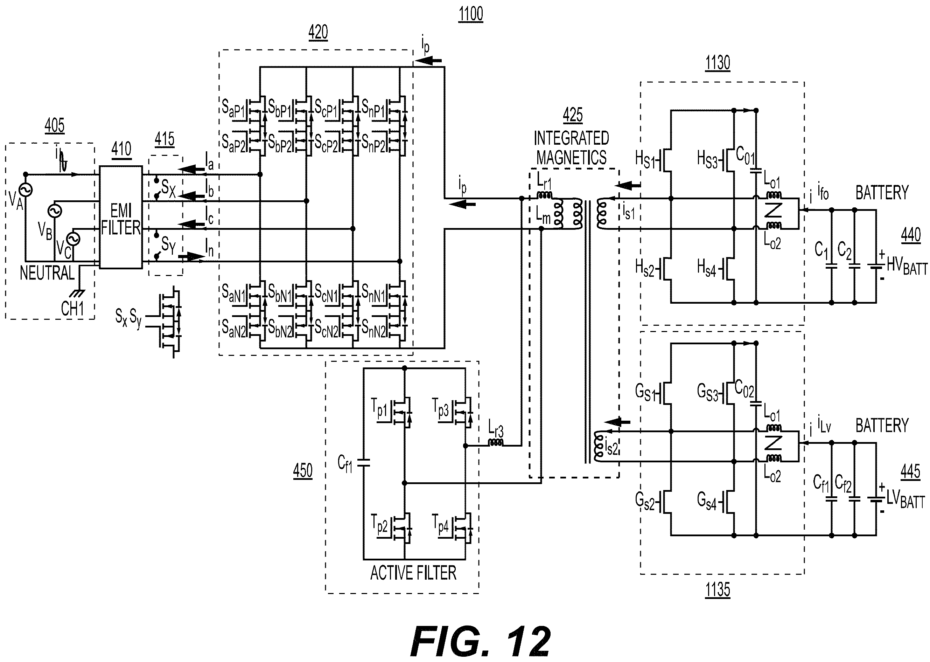

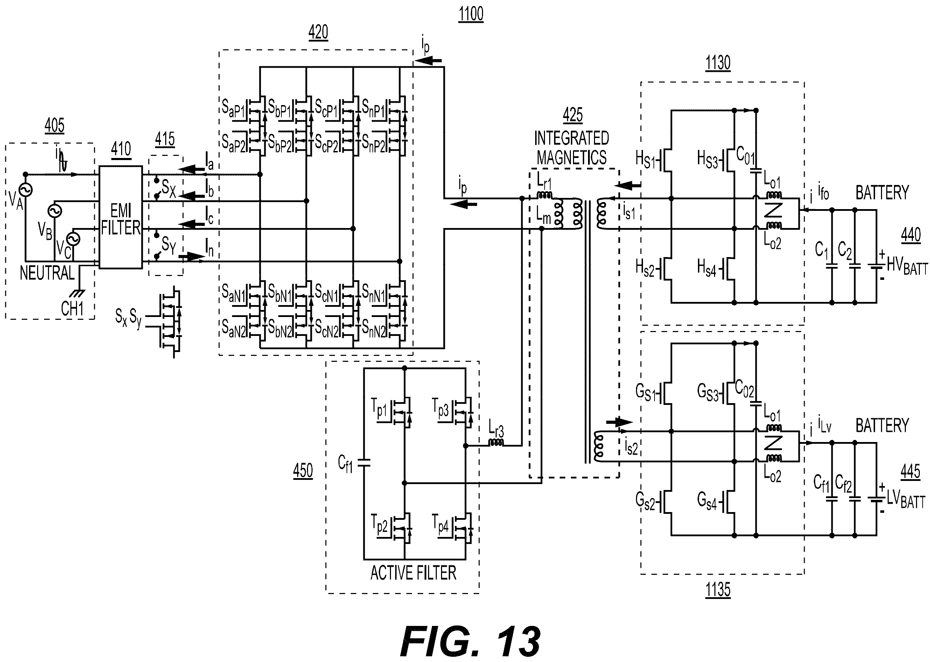

FIG. 5 depicts an exemplary system infrastructure for a power converter with an active filter on a transformer primary side, according to one or more embodiments. System 500 may be similar to system 400, with the exception of the connections of active filter 450. The low frequency ripple may be observed on the primary side or secondary side of transformer 425. The primary side may require additional filtering capacitors during a charging mode, for example, but the primary side placement of the active filter 450 may act as a V2G mode with a separate connection. On the secondary side of transformer 425, the active filter 450 placement may be convenient to filter low frequency ripple to HV battery 440. As depicted in FIG. 5, active filter 450 may be connected to primary side of transformer 425. FIG. 5 depicts system 500 operating in a charging mode, with power flowing from a three phase source at line 405 to HV battery 440 and LV battery 445. However, system 500 may be operated in a battery-to-battery operation (e.g., FIG. 10), a vehicle-to-load (battery-to-load) operation (e.g., similar to FIG. 12), or a simultaneous vehicle-to-load and battery-to-battery operation (e.g., similar to FIG. 13).

Controller 300 may control a switching operation of each of line switch 415, matrix converter 420, HV bridge rectifier 430, LV bridge rectifier 435, and active filter 450 to control a direction and amount of current through system 500. For example, controller 300 may operate matrix converter 420 to convert an input AC voltage from line 405 to a high-frequency voltage to transformer 425, or vice versa. Controller 300 may operate HV bridge rectifier 430 to convert a high-frequency voltage from transformer 425 to a high voltage DC power to HV battery 440, or vice versa. Controller 300 may operate LV bridge rectifier 435 to convert a high-frequency voltage from transformer 425 to a low voltage DC power to LV battery 445, or vice versa.

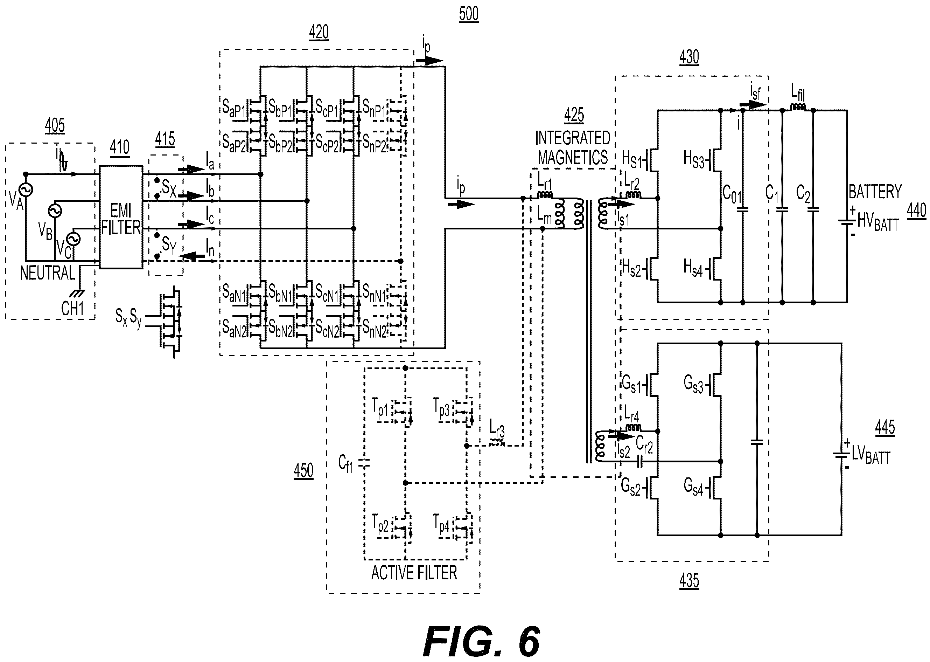

FIG. 6 depicts an exemplary power converter in a three-phase balanced operation with the active filter off, according to one or more embodiments. As depicted in FIG. 6, a three-phase source or load at line 405 may be balanced such that a neutral phase and filtering is not required. The three-phase voltages and currents may be monitored through a sensor. Controller 300 may ensure that la+lb+lc ≈ 0, or va+vb+vc ≈ 0 and the neutral current sensor also detects zero or approximately zero (e.g., an acceptably small value for a balanced supply), then the supply may be balanced. Controller 300 may determine these conditions initially and enable the system accordingly. Therefore, controller 300 may operate neutral phase upper bidirectional switch SnP1 and SnP2, and neutral phase lower bidirectional switch SnN1 and SnN2, of matrix converter 420 to be off. Controller 300 may operate active filter 450 to be off, and more specifically, may operate first switch Tp1, second switch Tp2, third switch Tp3, and fourth switch Tp4 to be off so that current does not flow through active filter 450.

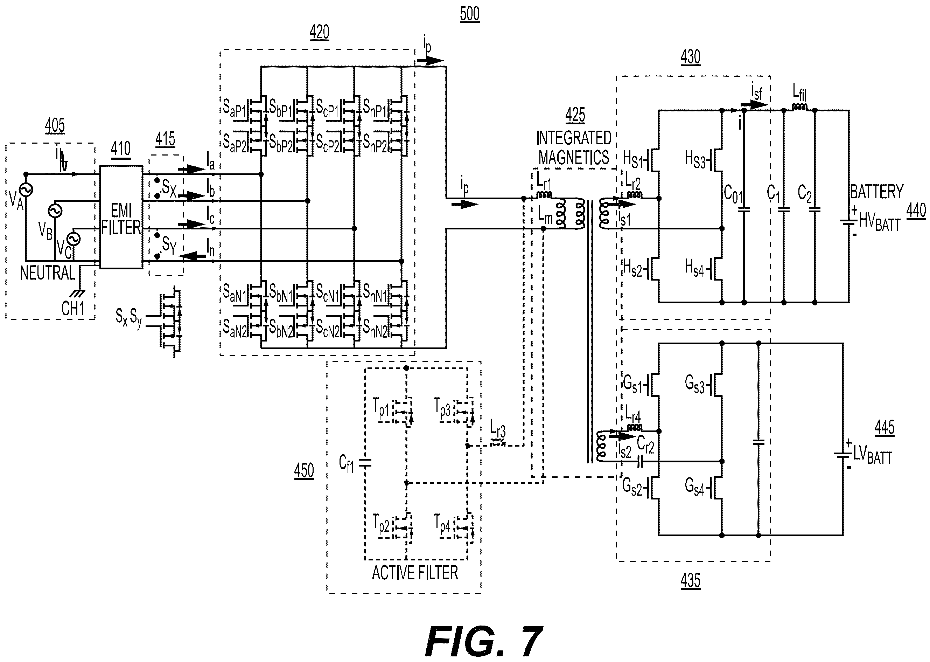

FIG. 7 depicts an exemplary power converter in a three-phase unbalanced operation with the active filter off, according to one or more embodiments. As depicted in FIG. 7, a three-phase source or load at line 405 may be unbalanced such that a neutral phase is required, but may not require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be off, and more specifically, may operate first switch Tp1, second switch Tp2, third switch Tp3, and fourth switch Tp4 to be off so that current does not flow through active filter 450.

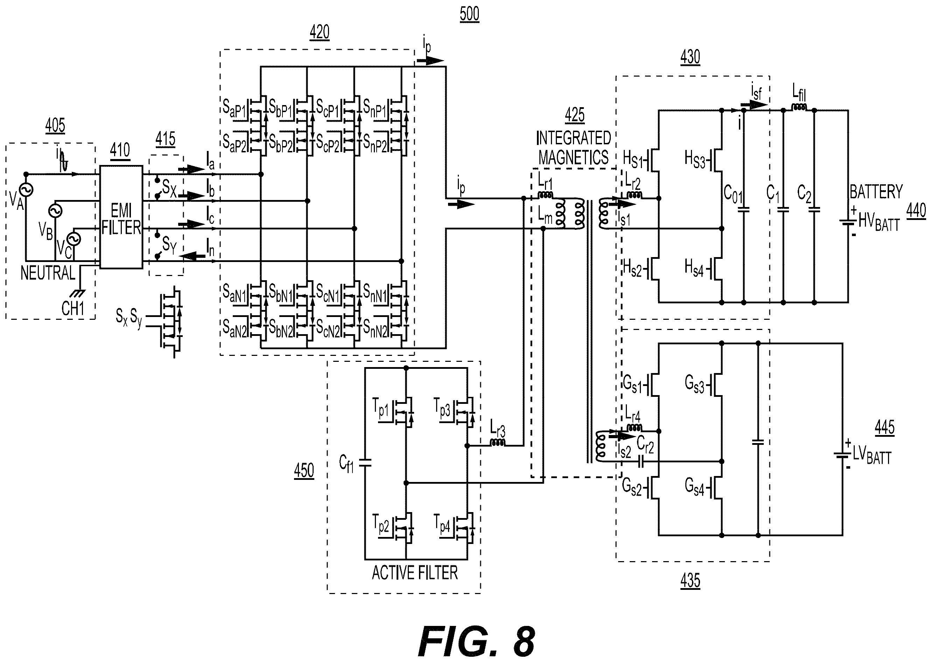

FIG. 8 depicts an exemplary power converter in a three-phase unbalanced operation with the active filter on, according to one or more embodiments. As depicted in FIG. 8, a three-phase source or load at line 405 may be unbalanced such that a neutral phase is required, and may require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be on, and more specifically, may operate first switch Tp1, second switch Tp2, third switch Tp3, and fourth switch Tp4 in an active filtering operation with Cf1.

FIG. 9 depicts an exemplary power converter in a single phase operation with the active filter on, according to one or more embodiments. As depicted in FIG. 9, a single phase source or load at line 405 may be connected such that a neutral phase is required, and may require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be on, and more specifically, may operate first switch Tp1, second switch Tp2, third switch Tp3, and fourth switch Tp4 in an active filtering operation with Cf1. Controller 300 may close line switch 415 when a single phase source or load at line 405 is detected, and more specifically, may close first switch Sx to connect the first phase leg and the second phase leg, and close second switch Sy to connect the third phase leg and the neutral phase leg.

FIG. 10 depicts an exemplary power converter in a battery-to-battery operation with the active filter off, according to one or more embodiments. As depicted in FIG. 10, in a battery-to-battery operation, such as HV battery 440 charging LV battery 445, or LV battery 445 pre-charging the connection to HV battery 440, a primary side of transformer 425 may be isolated and a neutral phase and filtering may not be required. Therefore, controller 300 may operate all switches of matrix converter 420 to be off. Controller 300 may operate active filter 450 to be off, and more specifically, may operate first switch Tp1, second switch Tp2, third switch Tp3, and fourth switch Tp4 to be off so that current does not flow through active filter 450.

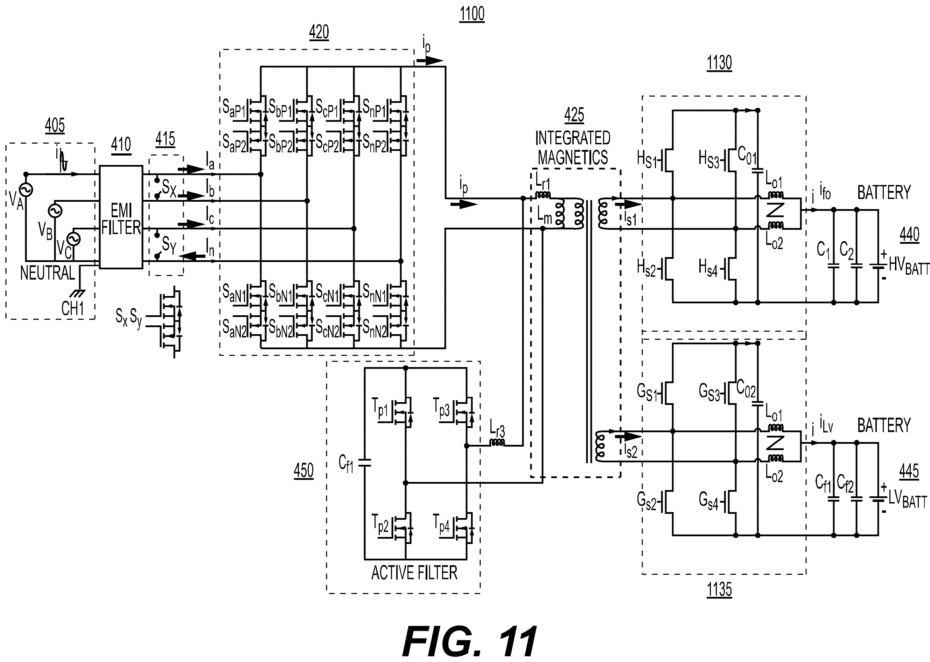

FIG. 11 depicts an exemplary system infrastructure for a current-fed dual-active-bridge (CFDAB) converter, according to one or more embodiments. System 1100 may be similar to system 500, with the exception of HV bridge rectifier 1130 and LV bridge rectifier 1135. Each of HV bridge rectifier 1130 and LV bridge rectifier 1135 may include an inductor pair. FIG. 11 depicts system 1100 operating in a charging mode, with power flowing from line 405 to HV battery 440 and LV battery 445.

As depicted in FIG. 11, a three-phase source at line 405 may be unbalanced such that a neutral phase is required, and may require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be on, and more specifically, may operate first switch Tp1, second switch Tp2, third switch Tp3, and fourth switch Tp4 in an active filtering operation with Cf1.

FIG. 12 depicts an exemplary CFDAB converter in a vehicle-to-load operation, according to one or more embodiments. FIG. 12 depicts system 1100 in a vehicle-to-load operation, with power flowing from HV battery 440 and LV battery 445 to a three phase load at line 405.

As depicted in FIG. 12, a three-phase load at line 405 may be unbalanced such that a neutral phase is required, and may require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be on, and more specifically, may operate first switch Tp1, second switch Tp2, third switch Tp3, and fourth switch Tp4 in an active filtering operation with Cf1.

FIG. 13 depicts an exemplary CFDAB converter in a simultaneous vehicle-to-load and battery-to-battery operation, according to one or more embodiments. FIG. 12 depicts system 1100 in a simultaneous vehicle-to-load and battery-to-battery operation, with power flowing from HV battery 440 to a three phase load at line 405, and simultaneously, from HV battery 440 to LV battery 445.

As depicted in FIG. 13, a three-phase load at line 405 may be unbalanced such that a neutral phase is required, and may require filtering. Therefore, controller 300 may operate neutral phase upper bidirectional switch SnP1 and SnP2, and neutral phase lower bidirectional switch SnN1 and SnN2, of matrix converter 420 in a neutral phase switching operation. Controller 300 may operate active filter 450 to be on, and more specifically, may operate first switch Tp1, second switch Tp2, third switch Tp3, and fourth switch Tp4 in an active filtering operation with Cf1.

One or more embodiments may provide a four-leg matrix converter for the onboard battery charger to operate with both single and three-phase. One or more embodiments may provide a phase shedding operation based on the current rating in a single phase operation. One or more embodiments may provide an active filter to reduce low-frequency (LF) ripple content. One or more embodiments may provide an improved light load operation point (i.e., a reduced switching frequency). One or more embodiments may improve the switching states of the converter operation with cascaded HV and LV. One or more embodiments may provide a power converter that operates efficiently for a wide range of input and output voltages.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising:
a transformer including a primary side and a secondary side;
a matrix converter connected to the primary side of the transformer and connected to a line for a voltage source or a load; and
an active filter configured to reduce a ripple in the system.

2. The system of claim 1, wherein the active filter is connected to the primary side of the transformer; or
wherein the active filter is connected to the secondary side of the transformer.

3. The system of any one of claims 1 to 2, wherein the matrix converter includes:
a first phase upper bidirectional switch,
a first phase lower bidirectional switch,
a second phase upper bidirectional switch,
a second phase lower bidirectional switch,
a third phase upper bidirectional switch,
a third phase lower bidirectional switch,
a neutral phase upper bidirectional switch, and
a neutral phase lower bidirectional switch.

4. The system of any one of claims 1 to 3, wherein the active filter includes:
a capacitor,
a first switch,
a second switch,
a third switch, and
a fourth switch.

5. The system of any one of claims 1 to 4, further comprising:
a high voltage bridge rectifier connected to the secondary side of the transformer;
wherein, preferably, the high voltage bridge rectifier includes an inductor pair.

6. The system of any one of claims 1 to 5, wherein the transformer further includes a tertiary side.

7. The system of claim 6, further comprising:
a low voltage bridge rectifier connected to the tertiary side of the transformer;
wherein, preferably, the low voltage bridge rectifier includes an inductor pair.

8. The system of any one of claims 1 to 7, wherein the system is configured to operate in each of a three phase source to battery operation, a battery to three phase load operation, a single phase source to battery operation, a battery to single phase load operation, a battery-to-battery operation, and a simultaneous battery-to-load and battery-to-battery operation.

9. The system of any one of claims 1 to 8, further comprising:
one or more controllers configured to control an operation of one or more of the matrix converter or the active filter.

10. The system of any one of claims 1 to 9, further comprising:
one or more batteries, wherein the system is provided as a bidirectional battery charger configured to:
receive input AC power from a source of the line, convert the input AC power to output DC power, and supply the output DC power to charge the one or more batteries, and
receive input DC power from the one or more batteries, convert the input DC power to output AC power, and supply the output AC power to a load of the line;
or, further comprising a battery; and a motor, wherein the system is provided as an electric vehicle.

11. An active filter for a power converter including a matrix converter, the active filter comprising:
a capacitor connected to a first node and a second node;
a first switch connected to the first node and a first external connection;
a second switch connected to the second node and the first external connection;
a third switch connected to the first node and a second external connection; and
a fourth switch connected to the second node and the second external connection.

12. The active filter of claim 11, wherein the first external connection and the second external connection are connected to the matrix converter of the power converter and a primary side of a transformer of the power converter; and/or wherein the first external connection and the second external connection are connected to a high voltage bridge rectifier of the power converter.

13. A bidirectional current-fed dual-active-bridge converter comprising:
a transformer including a primary side, a first secondary side, and a second secondary side;
a matrix converter connected to the primary side of the transformer and connected to a line for a voltage source or a load;
an active filter including a capacitor and four switches;
a first voltage bridge rectifier connected to the first secondary side of the transformer; and
a second voltage bridge rectifier connected to the second secondary side of the transformer;
wherein, preferably,

14. The bidirectional current-fed dual-active-bridge converter of claim 13, further comprising:
a first switch selectively connecting a first phase leg of the matrix converter and a second phase leg of the matrix converter, and
a second switch selectively connecting a third phase leg of the matrix converter and a neutral phase leg of the matrix converter.

15. The bidirectional current-fed dual-active-bridge converter of claim 13 or 14, wherein each phase leg of the matrix converter includes two bidirectional switches.
